# FASCICULE DE BREVET EUROPEEN

(11) **EP 2 028 737 B1**
(45) Date de publication et mention de la délivrance du brevet: **16.04.2014**
(21) Numéro de dépôt: 08161238.4
(22) Date de dépôt: 28.07.2008
(51) Int. Cl.: H02B 13/00

(54) **Dispositif de raccordement électrique entre deux cellules à moyenne ou haute tension et poste de distribution comportant au moins un tel dispositif**
Elektrische Anschlussvorrichtung zwischen zwei Zellen mit mittlerer Spannung oder Hochspannung und Verteilerstation, die mindestens eine solche Vorrichtung umfasst
Electrical connection device between two medium- or high-voltage cells and distribution substation containing at least one such device

(30) Priorité: 03.08.2007 FR 0756941
(43) Date de publication de la demande: 25.02.2009
(73) Titulaire: Schneider Electric Energy France, 92500 Rueil-Malmaison (FR)
(72) Inventeur: Pickford, John, 71000 MACON (FR)
(74) Mandataire: Ilgart, Jean-Christophe

(56) Documents cités:
- EP-A- 0 891 013
- US-A- 5 257 161

## Description

### DOMAINE TECHNIQUE ET ART ANTÉRIEUR

La présente invention se rapporte à un dispositif de raccordement électrique entre deux cellules à moyenne ou haute tension et à un poste de distribution d'énergie électrique à moyenne ou haute tension comportant au moins deux cellules raccordées par au moins un tel dispositif de raccordement.

Il est connu de réaliser des postes de distribution à moyenne ou haute tension constitués d'une pluralité de modules, appelés cellules blindées remplies de gaz diélectrique, par exemple de l'hexafluorure de soufre SF6. De tels postes comportent une cellule d'entrée, une cellule de sortie et des cellules d'interconnexion interposées entre les cellules d'entrée et de sortie. Des dispositifs de raccordement des cellules adjacentes, en particulier des jeux de barres de chaque cellule sont prévus entre les cellules adjacentes.

De tels dispositifs de raccordement sont connus par exemple des documents EP 0 891 013 et EP 520 933. Ces dispositifs de raccordement comportent un manchon isolant électrique de forme allongée dont les deux extrémités axiales tronconiques pénètrent dans des traversées de formes tronconiques montées dans une paroi de l'enceinte de la cellule, deux pinces d'embrochage formant un tube ajouré sont disposées longitudinalement à l'intérieur du manchon et embrochent chacune un plot de contact relié à une barre et disposé dans la traversée tronconique.

Les barres ainsi connectées forment un jeu de barre unique traversant tout le poste.

Les pinces sont formées de plusieurs doigts, un ressort hélicoïdal est classiquement prévu autour des doigts de chaque pince pour resserrer radialement les doigts, afin d'assurer le contact entre les doigts et le plot de contact. Afin d'exercer un effort suffisant, les ressorts comportent des spires de diamètre suffisamment grand.

Ces manchons ont pour but d'une part d'assurer l'isolement électrique du jeu de barre sous tension par rapport à l'enveloppe métallique de 1a cellule reliée à la masse, et d'autre part d'assurer l'étanchéité entre les cellules et le milieu extérieur pour éviter des détériorations dues aux agressions atmosphériques, et enfin de supporter mécaniquement le jeu de barres et en particulier les efforts électrodynamiques générés lors des défauts en court-circuit.

Le manchon isolant électrique est réalisé en matériau élastique déformable, par exemple en élastomère, chaque extrémité du manchon est comprimée dans une traversée pour éviter la présence d'air susceptible de provoquer des décharges partielles.

Cependant du fait du diamètre important des spires des ressorts, il existe un volume vide important entre la surface extérieure des pinces d'embrochage et la surface intérieure du manchon isolant. Lors du montage des extrémités du manchon dans les traversées par rapprochement des cellules, le manchon se déforme en premier lieu radialement pour combler le volume annulaire entre la surface extérieure des pinces et la surface intérieure du manchon, puis axialement en direction du fond des traversées. Il faut donc prévoir un manchon avec une quantité de matière suffisante pour assurer à la fois le remplissage du volume annulaire et un contact suffisant évitant la présence d'air entre les traversées et le manchon.

Les dispositifs de raccordement de l'état de la technique requièrent donc des manchons de taille importante, ils nécessitent une quantité de matière importante et sont d'un coût de fabrication élevé. La taille importante des dispositifs de raccordement implique également une taille totale d'une cellule plus importante et donc une taille plus importante du poste de distribution.

C'est par conséquent un but de la présente invention d'offrir des dispositifs de raccordement électrique entre cellules moyenne ou haute tension adjacentes offrant une grande efficacité de raccordement tout en offrant une taille et un coût réduits.

### EXPOSÉ DE L'INVENTION

Le but précédemment énoncé est atteint par un dispositif de raccordement dans lequel les ressorts hélicoïdaux montés autour des pinces sont remplacés par des ressorts tubulaires fendus. Ainsi pour exercer une même contrainte radiale celui-ci est d'épaisseur plus faible, ce qui limite le jeu entre la surface intérieure du manchon isolant et la surface extérieure des pinces d'embrochage. Ainsi la quantité de matière pour combler ce volume annulaire est réduite. La déformation de la matière du manchon est donc essentiellement longitudinale, l'effort de compression exercé entre le manchon et chacune des traversées est donc plus important assurant donc un contact amélioré entre le manchon et les traversées, les inclusions d'air sont donc évitées lors du montage.

L'utilisation d'un ressort tubulaire fendu permet également de réduire la quantité de matière nécessaire pour le manchon, puisque le volume à combler entre les pinces et la surface intérieure du manchon est plus faible. La taille du manchon est également réduite. Le coût de réalisation du manchon est donc diminué. La taille des traversées s'en trouve également réduite ainsi que celles des cellules et du poste de distribution composé de ces cellules, leur coût de fabrication en est donc également réduit.

En outre, la compression radiale exercée par le manchon au niveau du ressort tubulaire fendu provoque un resserrement du ressort tubulaire, provoquant une augmentation de la pression de contact entre les doigts de la pince et le plot de contact.

La présente invention a alors principalement pour objet un dispositif de raccordement électrique entre des première et deuxième cellules moyenne ou haute tension adjacentes, les première et deuxième cellules comportant des enceintes étanches remplies de gaz diélectrique, ledit dispositif comportant :
- un manchon en matériau déformable élastiquement, isolant électrique, d'axe longitudinal,
- des première et deuxième pinces d'embrochage disposées à l'intérieur du manchon selon l'axe longitudinal, lesdits première et deuxième pinces étant destinées à embrocher respectivement un plot de contact de la première et de la deuxième cellule,
- des premier et deuxième moyens élastiques entourant respectivement les première et deuxième pinces d'embrochage, lesdits premier et deuxième moyens élastiques étant destinés à exercer un effort radial,
caractérisé en ce que les premier et deuxième moyens élastiques sont des ressorts tubulaires fendus.

Les ressorts tubulaires fendus sont en matériau conducteur électrique, par exemple en acier.

L'enveloppe du ressort tubulaire fendue a avantageusement une épaisseur comprise entre 0,5 mm et 2,5 mm.

Les deux extrémités axiales du manchon isolant électrique sont par exemple de forme tronconique, le manchon isolant électrique étant en élastomère.

Les pinces peuvent comporter une pluralité de doigts longitudinaux formant un tube, lesdits doigts étant munis d'encoches au niveau du montage du ressort tubulaire fendu permettant de réduire la saillie radiale du ressort par rapport à la surface extérieure des doigts longitudinaux. Une entretoise cylindrique est avantageusement disposée entre les doigts pour définir un diamètre minimum apte à permettre l'insertion des plots de contact des première et deuxième cellules.

Le dispositif de raccordement selon l'invention a par exemple une longueur inférieure ou égale à 143 mm et un diamètre extérieur inférieur ou égal à 56,5 mm pour une tension nominale de 24kV.

La présente invention a également pour objet un poste de distribution comportant au moins deux cellules comprenant chacune au moins une barre collectrice, les barres étant reliées par un dispositif de raccordement selon l'invention.

Dans le cas d'un poste de distribution triphasé, chaque cellule comporte un jeu de trois barres collectrices, chaque barre d'un jeu étant reliée à une barre du jeu de l'autre cellule par un dispositif de raccordement selon l'invention.

Chaque cellule comporte par exemple une enceinte étanche remplie de gaz diélectrique, chaque barre collectrice étant équipée à au moins une de ses extrémités longitudinales d'un plot de contact destiné à pénétrer dans une pince d'embrochage du dispositif de raccordement, ledit plot de contact étant reçu dans une traversée montée dans une paroi de l'enceinte en regard d'une paroi de l'enceinte adjacente, la traversée ayant une forme correspondante à celle d'une extrémité longitudinale du dispositif de raccordement, chaque extrémité longitudinale du dispositif de raccordement étant insérée dans une traversée.

La traversée a par exemple une longueur de 80 mm et un diamètre extérieur du côté de l'insertion du dispositif de raccordement de 84 mm et un diamètre intérieur du côté de l'insertion du dispositif de raccordement de 57 mm, pour une tension nominale de 24 kV.

### BRÈVE DESCRIPTION DES DESSINS

La présente invention sera mieux comprise à l'aide de la description qui va suivre et des dessins en annexe, sur lesquels :
- la figure 1 est une vue en coupe longitudinale d'un dispositif de raccordement selon la présente invention sans les pinces d'embrochage,
- la figure 2 est une vue en coupe longitudinale de deux cellules raccordées représentées partiellement par le dispositif de raccordement de la figure 1,
- la figure 3 est une vue en perspective d'une partie isolée du dispositif de raccordement de la figure 1,
- la figure 4 est une vue en coupe longitudinale d'une traversée recevant un dispositif de raccordement selon la présente invention,
- la figure 5 représente les raccordements des trois barres de deux jeux de deux cellules selon l'invention formant un poste de distribution triphasé.

### EXPOSÉ DÉTAILLÉ DE MODES DE RÉALISATION PARTICULIERS

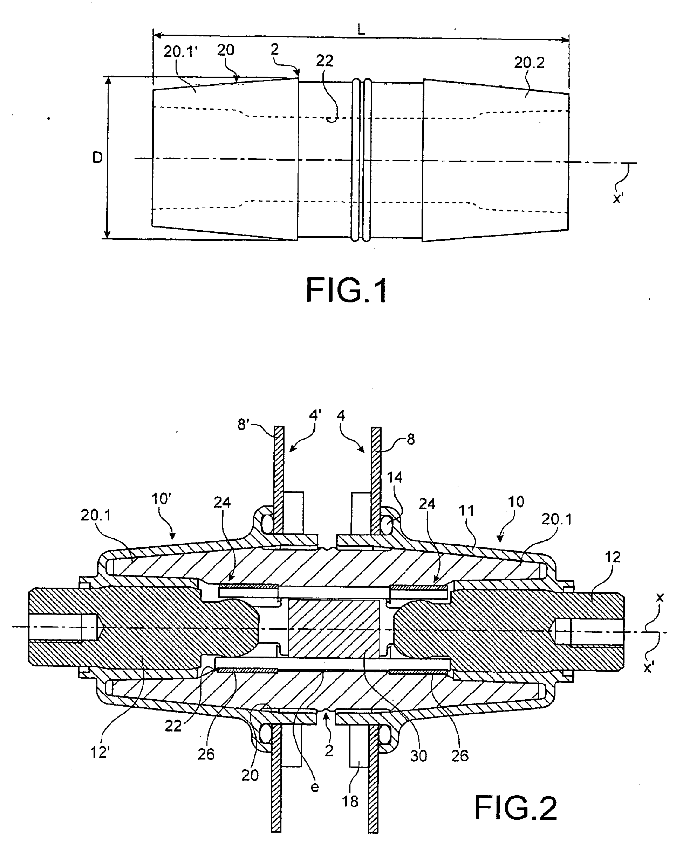

Sur les figures 1 et 2, on peut voir un dispositif de raccordement électrique 2 selon la présente invention raccordant deux cellules 4, 4'.

Les deux cellules 4, 4' étant sensiblement identiques, nous ne décriront que la cellule 4.

La cellule 4 comporte une enceinte étanche remplie de gaz diélectrique par exemple de l'hexafluorure de soufre (SF6), et un jeu de barres collectrices (non représentées), destinées à être raccordées à un jeu de barres collectrices de la cellule 4' adjacente de manière à former un jeu de barres uniques. Les cellules ainsi raccordées forment un poste de distribution moyenne ou haute tension.

Dans la description qui va suivre nous décrirons uniquement le raccordement entre deux cellules, mais il est bien entendu que la présente invention s'applique à des postes de distribution comportant au moins deux cellules, notamment à des postes de distribution comportant une cellule d'entrée, éventuellement des cellules d'interconnexions intermédiaires et une cellule de sortie.

Le jeu de barres comporte trois barres collectrices, afin de transporter un courant triphasé (généralement, une barre par phase).

L'enceinte comporte une paroi 8 destinée à faire face à une paroi 8' de la cellule 4', cette paroi 8 comporte une ouverture 9 dans laquelle est montée une traversée 10 destinée à recevoir une extrémité longitudinale du dispositif de raccordement 2 selon la présente invention.

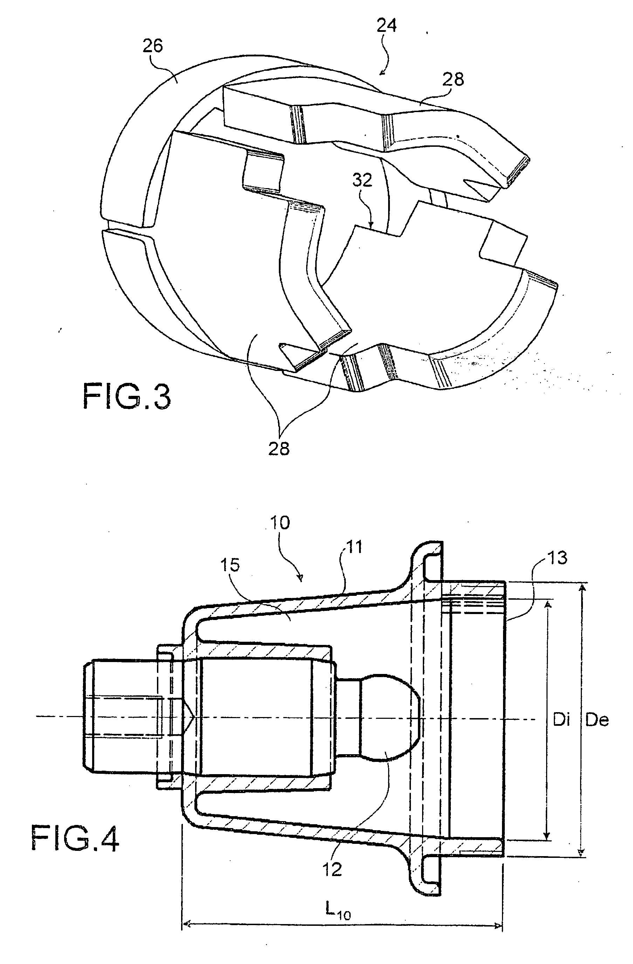

La traversée 10, représentée seule sur la figure 4, d'axe X comporte à une première extrémité longitudinale une ouverture 13 pour recevoir une extrémité du dispositif de raccordement 2 et une deuxième extrémité longitudinale opposée, un plot de contact 12 d'axe X relié électriquement à une barre collectrice (non représentée). La deuxième extrémité longitudinale est fermée par le plot 12.

La traversée 10 est montée de manière étanche sur la paroi 8 afin d'éviter la fuite de gaz diélectrique vers l'extérieur. Cette étanchéité est réalisée dans l'exemple représenté par un joint torique 14 monté dans une gorge annulaire 16 bordant la paroi extérieure de la traversée 10.

Par exemple, la traversée 10 est solidarisée à la paroi 8 par vissage au moyen d'un écrou 18 coopérant avec un filetage prévu sur la paroi extérieure de la traversée 10. L'écrou est en appui sur la face extérieure de la paroi 8.

De manière avantageuse, la traversée 10 comporte une enveloppe 11 surmoulée sur le plot de contact 12, ainsi une étanchéité parfaite est obtenue entre le plot 12 de contact et l'enveloppe de la traversée 10 évitant de recourir à des moyens d'étanchéité additionnels.

L'enveloppe 11 de la traversée définit entre le plot de contact 12 et la paroi radialement extérieure de la traversée 10 un logement annulaire 15 s'étendant longitudinalement selon l'axe X, celui-ci étant destiné à recevoir une extrémité longitudinale du dispositif de raccordement 2 selon la présente invention. Ce logement annulaire 15 est de forme tronconique adaptée à recevoir une extrémité longitudinale du dispositif de raccordement 2.

Le dispositif de raccordement 2 selon la présente invention comporte un manchon 20 d'axe X' en matériau isolant électrique et déformable élastiquement, par exemple en élastomère, comportant une première extrémité longitudinale 20.1 destinée à pénétrer dans la traversée 10, en particulier dans le logement annulaire 15 et une deuxième extrémité longitudinale 20.2 destinée à pénétrer dans la traversée de la cellule adjacente 4'.

Les extrémités 20.1 et 20.2 sont également de forme tronconique afin de coopérer avec les logements 15 définis par chacune des enveloppes 11 des traversées 10.

Le manchon 20 comporte un passage central 22 dans lequel sont montées deux pinces d'embrochage 24 destinées chacune à recevoir des plots 12 de contact de chacune des traversées des cellules 4, 4'.

Les pinces d'embrochage 24 sont formées par des doigts longitudinaux séparés par des fentes et aptes à se déplacer radialement.

Selon la présente invention et comme cela est particulièrement visible sur la figure 3, les pinces d'embrochage 24, en particulier les doigts de ces pinces sont contraintes radialement par un ressort tubulaire fendu 26, montées sur la surface extérieure des pinces d'embrochage 24, de manière à exercer un effort radial vers l'axe X'. Ce ressort tubulaire fendu 26 est par exemple réalisé en matériau conducteur électrique, par exemple en acier. L'épaisseur de la tôle enroulée pour former le ressort fendu est par exemple comprise entre 0.5 mm et 2.5 mm.

Le diamètre intérieur du ressort tubulaire 26 au repos est tel que le diamètre intérieur des pinces d'embrochage 24 au repos soit légèrement inférieur au diamètre extérieur des plots 12 afin d'assurer un bon contact entre les pinces et les plots 12.

Comme on peut le voir sur la figure 3, les doigts des deux pinces d'embrochage 24 sont formés par trois portions de cylindres 28 de section transversale en arc de cercle, il est alors prévu afin de maintenir un diamètre intérieur entre ces portions 28 de cylindre, une entretoise cylindrique 30 de diamètre légèrement inférieur au diamètre extérieur des plots de contact 12, afin de permettre l'insertion de ceux-ci dans les pinces d'embrochage sans difficulté. Cette entretoise 30 n'a plus de fonction lorsque les deux cellules 4, 4' sont raccordées.

Comme on peut le voir les doigts peuvent avoir des découpes particulières 32 pour recevoir le ressort. Ces découpes 32 servent à positionner le ressort tubulaire 26, la pression radiale du ressort tubulaire s'exerce au droit du contact. Ces découpes servent d'arrêt axial pour aligner le ressort 26 et les trois doigts suivant l'axe longitudinal. En outre, elles permettent également de loger le ressort tubulaire 26 dans le volume formé par les trois doigts de contact afin de minimiser au maximum la saillie radiale du ressort tubulaire 26, et donc le volume vide entre le diamètre intérieur 22 du manchon isolant 20 et la surface extérieure des pinces d'embrochages 24.

Selon la présente invention, le tube formant le ressort tubulaire fendu 26 selon la présente invention ne nécessite qu'une épaisseur réduite pour exercer la contrainte mécanique radiale requise. Ainsi le jeu **e** entre une surface radialement extérieure de l'ensemble formé par les portions de cylindre 28 et la paroi intérieure du passage 22 du manchon isolant 20 est réduit. Le volume annulaire ainsi défini est réduit par rapport à celui de l'état de la technique.

Nous allons expliquer maintenant le raccordement des cellules 4 et 4' par le dispositif de raccordement 2 selon la présente invention, plus particulièrement le raccordement électrique entre les barres collectrices (non représentées) dont les extrémités sont formées par les plots de contact 12, 12'.

L'extrémité 20.1 du manchon 20 est introduite dans la traversée 10 de manière à aligner l'axe X' du manchon 20 avec l'axe X de la traversée ; l'extrémité libre du plot de contact 12 pénétre alors dans la pince d'embrochage 24. La cellule 4' est alors rapprochée de la cellule 4 de manière à aligner sensiblement le plot de contact 12' avec le plot de contact 12, puis est rapprochée axialement selon l'axe X de manière à faire pénétrer l'extrémité 20.2 du manchon isolant 20 dans la traversée 10' et à faire pénétrer le plot de contact 12' dans l'autre pince d'embrochage 24.

Ensuite, au moyen d'un système reliant mécaniquement les deux enceintes des cellules 4, 4' les parois en regard des deux cellules sont rapprochées selon l'axe X, comprimant alors le manchon isolant 20 qui se trouve déformé à l'intérieur des traversées 10, 10'. La déformation du manchon isolant 20 provoque sa déformation radiale en direction de l'axe X afin de combler le volume annulaire entre la paroi radialement extérieure des pinces d'embrochage et la paroi intérieure du passage du manchon isolant 20. Le manchon 20 se déforme ensuite axialement en direction du fond des traversées 10, 10'.

Un jeu est avantageusement prévu entre l'extrémité du manchon 20 et le fond de la traversée Celui-ci sert de réservoir pour stocker l'air résiduel expulsé entre les extrémités tronconiques du manchon isolant 20 et les logements des traversées 10, 10' lors de l'assemblage afin de garantir un contact optimum entre le manchon isolant 20 et les traversées 10 et 10' et diriger efficacement le fluage du manchon isolant 20 lors de l'assemblage. Ce jeu permet d'éviter un système hyperstatique. Par ailleurs les risques d'ondulation du manchon et par conséquent les inclusions d'air sont réduits. Enfin ce jeu permet une tolérance plus grande au niveau des cotes de fabrication des différents éléments.

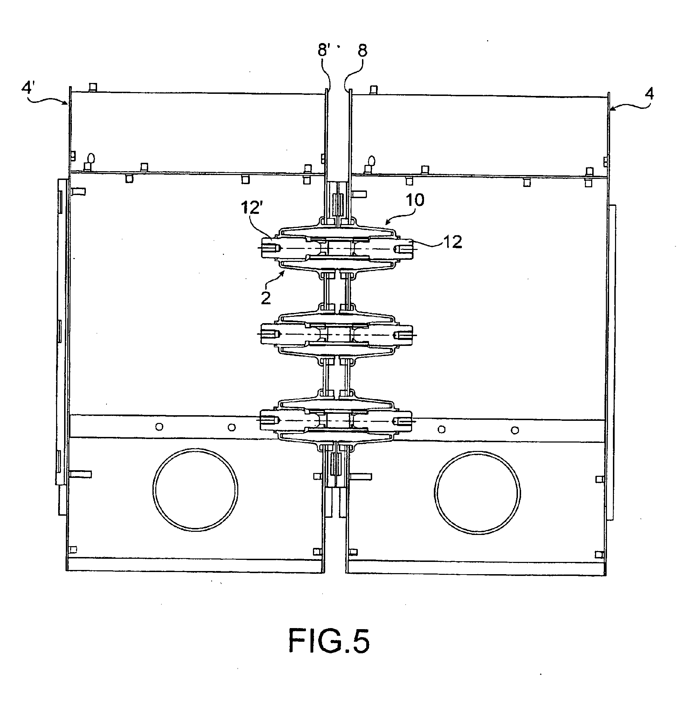

Le dispositif de raccordement selon la présente invention est du type unipolaire, il permet de relier un plot de contact d'une cellule à un autre plot de contact de cellules, cependant il est avantageusement utilisé pour raccorder des jeux de trois barres afin de réaliser des postes de distribution triphasés comme cela est représenté sur la figure 5. On peut voir le raccordement de trois paires de barres pour former un poste de distribution triphasé. Dans ce cas, les trois manchons 20 sont sur les trois plots 12 de la cellule 4, puis la cellule 4' est rapprochée assurant un raccordement simultané des trois paires de barres.

Selon la présente invention, puisque le volume entre les pinces d'embrochage et la surface intérieure du passage du manchon isolant est réduit par rapport au dispositif de l'état de la technique, la déformation en direction de l'axe X est réduite. Ainsi la déformation du manchon isolant 20 est essentiellement selon la direction X vers le fond des traversées 10, 10'.

La pression de contact du manchon isolant contre l'enveloppe de la traversée 10, et de manière similaire contre l'enveloppe de la traversée 10' et supérieure à celle obtenue avec les dispositifs de raccordement de l'état de la technique, l'air se trouvant entre la traversée et le manchon isolant 20 est chassé de manière complète, évitant les décharges partielles du fait de la présence d'inclusion d'air entre le manchon et les traversées 10, 10'. En outre, puisque, grâce à la présente invention, il est possible de maîtriser la direction préférentielle de déformation du manchon, la quantité de matière requise pour réaliser le manchon est réduite.

En outre, la pression radiale exercée par le manchon isolant lors de sa compression provoque un resserrement du ressort tubulaire fendu, et donc une augmentation de la pression de contact entre les doigts de chaque pince d'embrochage 24 et le plot 12 qu'elle reçoit. En effet, la déformation par compression longitudinale du manchon 20 se traduit par un gonflement radial qui vient appuyer sur le diamètre extérieur du ressort tubulaire fendu, qui peut se resserrer du fait de la fente longitudinale. Cette augmentation de la pression de contact entre les doigts de chacune des pinces d'embrochage 24 et le plot de contact 12 associé réduit la résistance électrique de transfert entre le plot de contact 12 et les doigts de la pince 24, ce qui permet de réduire les pertes thermiques au niveau du raccordement électrique.

En conséquence, le ressort tubulaire fendu selon la présente invention permet un gain de performances en réduisant l'échauffement par effet Joule et les performances au niveau de l'amorçage, il limite les décharges partielles en assurant un meilleur contact entre le manchon et les traversées en assurant une évacuation efficace de l'air lors du montage du manchon dans chacune des traversées.

Grâce à la présente invention il est donc possible de réduire la taille du manchon 20 et par conséquent la taille des traversées 10, 10' et donc celle des cellules et des postes de distribution composés de ces cellules raccordées par les dispositifs de raccordement selon la présente invention. Cette réduction de volume s'accompagne d'une réduction du prix de revient du dispositif de raccordement, de chacune des cellules et du poste de distribution.

De manière générale, le dispositif de raccordement présente une longueur et un diamètre extérieur réduits de 20 % par rapport aux dimensions d'un dispositif de raccordement de l'état de la technique. De même pour la traversée montée sur la cellule et destinée à recevoir une extrémité du dispositif selon l'invention, ses dimensions peuvent être réduites d'environ 20 % également, notamment sa longueur, et les diamètres extérieur et intérieur de son ouverture.

A titre d'exemple, nous allons donner des dimensions d'un dispositif de raccordement et d'une traversée selon la présente invention pour une tension nominale ou assignée de 24 kV et, à titre de comparaison, nous allons donner celles d'un dispositif de raccordement et d'une traversée de l'état de la technique pour la même tension nominale.

Le dispositif de raccordement selon l'invention a une longueur L de 143 mm et un diamètre extérieur D de 56,5 mm, alors que le dispositif de raccordement de l'état de la technique a une longueur de 180 mm et un diamètre extérieur D de 76 mm.

On observe donc que grâce à l'invention, la longueur du dispositif de raccordement peut être réduite de 20 % environ et le diamètre extérieur peut être réduit de 26 % environ.

La traversée 10 adaptée à recevoir le dispositif de raccordement selon l'invention présente une longueur L₁₀ de 80 mm, un diamètre extérieur Du côté de l'insertion du dispositif de raccordement de 84 mm et un diamètre intérieur Di du côté de l'insertion du dispositif de raccordement de 57 mm. Tandis que la traversée de l'état de la technique présente une longueur 95,5 mm, un diamètre extérieur du côté de l'insertion du dispositif de raccordement de 114 mm et un diamètre intérieur Di du côté de l'insertion du dispositif de raccordement de 81 mm. On observe donc que grâce à l'invention, la longueur de la traversée peut être réduite de 16 % environ, le diamètre extérieur peut être réduit de 26 % environ et le diamètre intérieur peut être réduit de 30 % environ.

Par conséquent, les gains de place et de matière réalisés grâce à la présente invention sont donc substantiels.

Comme nous l'avons dit précédemment, les postes de distribution selon la présente invention peuvent comporter une pluralité de cellules intermédiaires reliées à deux cellules adjacentes par les dispositifs selon la présente invention, cependant les postes de distribution comportent également une cellule d'entrée reliée uniquement à une seule cellule, et une cellule de sortie reliée également uniquement à une seule cellule, par les dispositifs de raccordement selon la présente invention.

## Revendications

1. Dispositif de raccordement électrique entre des première (4) et deuxième (4') cellules moyenne ou haute tension adjacentes, les première (4) et deuxième (4') cellules comportant des enceintes étanches remplies de gaz diélectrique, ledit dispositif comportant :
- un manchon (20) en matériau déformable élastiquement, isolant électrique, d'axe longitudinal (X'),
- des première et deuxième pinces d'embrochage (24) disposées à l'intérieur du manchon (20) selon l'axe longitudinal (X'), lesdites première et deuxième pinces (24) étant destinées à embrocher respectivement un plot de contact (12, 12') de la première (4) et de la deuxième (4') cellule,
- des premier et deuxième moyens élastiques (26) entourant respectivement les première et deuxième pinces d'embrochage, lesdits premier et deuxième moyens élastiques (26) étant destinés à exercer un effort radial,
**caractérisé en ce que** les premier et deuxième moyens élastiques (26) sont des ressorts tubulaires fendus.

2. Dispositif de raccordement selon la revendication 1, dans lequel les ressorts tubulaires (26) fendus sont en acier.

3. Dispositif de raccordement selon la revendication 1 ou 2, dans lequel l'enveloppe du ressort tubulaire fendue a une épaisseur comprise entre 0,5 mm et 2,5 mm.

4. Dispositif de raccordement selon l'une des revendications 1 à 3, dans lequel le manchon (20) isolant électrique est en élastomère.

5. Dispositif de raccordement selon l'une des revendications 1 à 4, dans lequel les pinces (24) comportent une pluralité de doigts longitudinaux (28) formant un tube, lesdits doigts longitudinaux (28) comportant des encoches (32) au niveau du montage du ressort tubulaire fendu (26).

6. Dispositif de raccordement selon la revendication 5, dans lequel une entretoise (30) cylindrique est disposée à l'intérieur des doigts pour définir un diamètre minimum apte à permettre l'insertion de plots de contact (12, 12') des première (4) et deuxième (4') cellules.

7. Dispositif de raccordement selon l'une des revendications 1 à 6, ayant une longueur inférieure ou égale à 143 mm et un diamètre extérieur inférieur ou égal à 56,5 mm pour une tension nominale de 24 kV.

8. Poste de distribution comportant au moins deux cellules (4, 4') comprenant chacune au moins une barre collectrice, les barres étant reliées par un dispositif de raccordement (2) selon l'une des revendications précédentes.

9. Poste de distribution selon la revendication 8, dans lequel chaque cellule (4, 4') comporte un jeu de trois barres collectrices, chaque barre d'un jeu étant reliée à une barre du jeu de l'autre cellule par un dispositif de raccordement (2) selon l'une des revendications 1 à 6.

10. Poste de distribution selon la revendication 8 ou 9 dans lequel chaque cellule (4, 4') comporte une enceinte étanche remplie de gaz diélectrique, chaque barre collectrice étant équipée à au moins une de ses extrémités longitudinales d'un plot de contact (12, 12') destiné à pénétrer dans une pince d'embrochage (24) du dispositif de raccordement (2), ledit plot de contact (12, 12') étant reçu dans une traversée (10, 10') montée dans une paroi (8, 8') de l'enceinte en regard d'une paroi (8', 8) de l'enceinte adjacente, la traversée (10, 10') ayant une forme correspondante à celle d'une extrémité longitudinale (20.1, 20.2) du dispositif de raccordement (2), chaque extrémité longitudinale (20.1, 20.2) du dispositif de raccordement (2) étant insérée dans une traversée (10, 10').

11. Poste de distribution selon l'une des revendications 8 à 10, dans lequel le dispositif de raccordement a une longueur de 143 mm et un diamètre extérieur de 56,5 mm et la traversée (10, 10') a une longueur de 80 mm et un diamètre extérieur du côté de l'insertion du dispositif de raccordement (2) de 84 mm et un diamètre intérieur du côté de l'insertion du dispositif de raccordement de 57 mm pour une tension nominale de 24 kV.

## Patentansprüche

1. Elektrische Anschlussvorrichtung zwischen einer ersten (4) und einer zweiten Mittel- oder Hochspannungszelle (4'), die aneinander angrenzen, wobei die erste (4) und die zweite Zelle (4') dichte Gehäuse aufweisen, die mit dielektrischem Gas gefüllt sind, wobei die Vorrichtung umfasst:
- eine Hülse (20) aus elastisch verformbarem, elektrisch isolierendem Material mit einer Längsachse (X'),
- eine erste und eine zweite Steckklemme (24), die in der Hülse (20) entlang der Längsachse (X') angeordnet sind, wobei die erste und die zweite Klemme (24) dazu bestimmt sind, jeweils einen Kontaktstift (12, 12') der ersten (4) bzw. der zweiten Zelle (4') aufzunehmen,
- ein erstes und ein zweites elastisches Mittel (26), welche die erste bzw. zweite Steckklemme umgeben, wobei das erste und das zweite elastische Mittel (26) dazu bestimmt sind, eine radiale Kraft auszuüben,
**dadurch gekennzeichnet, dass** das erste und das zweite elastische Mittel (26) rohrförmige, gespaltene Federglieder sind.

2. Anschlussvorrichtung nach Anspruch 1,
wobei die rohrförmigen, gespaltenen Federglieder (26) aus Stahl bestehen.

3. Anschlussvorrichtung nach Anspruch 1 oder 2,
wobei der Mantel des rohrförmigen, gespaltenen Federglieds eine Dicke von zwischen 0,5 mm und 2,5 mm hat.

4. Anschlussvorrichtung nach einem der Ansprüche 1 bis 3,
wobei die elektrisch isolierende Hülse (20) aus Elastomer besteht.

5. Anschlussvorrichtung nach einem der Ansprüche 1 bis 4,
wobei die Klemmen (24) eine Mehrzahl von longitudinalen Fingern (28) aufweisen, die einen Tubus bilden, wobei die longitudinalen Finger (28) Aussparungen (32) im Bereich der Anbringung des rohrförmigen, gespaltenen Federglieds (26) aufweisen.

6. Anschlussvorrichtung nach Anspruch 5,
wobei ein zylindrischer Steg (30) innerhalb der Finger eingesetzt ist, um einen Mindestdurchmesser zu definieren, mit dem das Einführen von Kontaktstiften (12, 12') der ersten (4) und der zweiten Zelle (4') möglich ist.

7. Anschlussvorrichtung nach einem der Ansprüche 1 bis 6,
mit einer Länge kleiner oder gleich 143 mm und mit einem Außendurchmesser kleiner oder gleich 56,5 mm für eine Nennspannung von 24 kV.

8. Verteilerstation mit zumindest zwei Zellen (4, 4'), die jeweils zumindest eine Sammelschiene enthalten, wobei die Sammelschienen über eine Anschlussvorrichtung (2) nach einem der vorangehenden Ansprüche verbunden sind.

9. Verteilerstation nach Anspruch 8,
wobei jede Zelle (4, 4') einen Satz von drei Sammelschienen enthält, wobei jede Sammelschiene eines Satzes mit einer Sammelschiene des Satzes der weiteren Zelle über eine Anschlussvorrichtung (2) nach einem der Ansprüche 1 bis 6 verbunden ist.

10. Verteilerstation nach Anspruch 8 oder 9,
wobei jede Zelle (4, 4') ein dichtes Gehäuse aufweist, das mit dielektrischem Gas gefüllt ist, wobei jede Sammelschiene an zumindest einem ihrer Längsenden mit einem Kontaktstift (12, 12') ausgestattet ist, der dazu bestimmt ist, in eine Steckklemme (24) der Anschlussvorrichtung (2) einzugreifen, wobei der Kontaktstift (12, 12') in einem Durchgang (10, 10') aufgenommen ist, der in eine Wandung (8, 8') des Gehäuses entgegengesetzt zu einer Wandung (8', 8') des angrenzenden Gehäuses eingebracht ist, wobei der Durchgang (10, 10') eine Form hat, die der eines Längsendes (20.1, 20.2) der Anschlussvorrichtung (2) entspricht, wobei jedes Längsende (20.1, 20.2) der Anschlussvorrichtung (2) in einen Durchgang (10, 10') eingeführt ist.

11. Verteilerstation nach einem der Ansprüche 8 bis 10,
wobei die Anschlussvorrichtung eine Länge von 143 mm und einen Außendurchmesser von 56,5 mm aufweist und der Durchgang (10, 10') eine Länge von 80 mm und einen Außendurchmesser auf der Einführseite der Anschlussvorrichtung (2) von 84 mm und einen Innendurchmesser auf der Einführseite der Anschlussvorrichtung von 57 mm für eine Nennspannung von 24 kV aufweist.

## Claims

1. A connection device for making electrical connection between medium or high voltage bays adjacent to each other and comprising a first bay (4) and a second bay (4'), the first bay (4) and second bay (4') comprising gastight chambers filled with dielectric gas, the said device comprising:
- a sleeve (20) of electrically insulating and elastically deformable material and defining a longitudinal axis (X');
- first and second connecting grippers (24) disposed inside the sleeve (20) on the longitudinal axis (X'), the said first and second grippers (24) being arranged to connect, respectively, a contact piece (12) of the first bay (4) and a contact piece (12') of the second bay (4'); and
- first and second resilient means (26) which surround the first and second connecting grippers respectively, the said first and second resilient means (26) being arranged to exert a radial force;
**characterized in that** the first and second resilient means (26) are split tubular springs.

2. A connection device according to claim 1, wherein the split tubular springs (26) are of steel.

3. A connection device according to claim 1 or claim 2, wherein the envelope of the split tubular spring has a thickness in the range between 0.5 mm and 2.5 mm.

4. A connection device according to any one of claims 1 to 3, wherein the insulating sleeve (20) is made of elastomer.

5. A connection device according to any one of claims 1 to 4, wherein the grippers (24) comprise a plurality of longitudinal fingers (28) defining a tube, the said longitudinal fingers (28) having notches (34) for mounting the split tubular ring (26) therein.

6. A connection device according to claim 5, wherein a cylindrical spacer (30) is disposed inside the fingers in order to define a minimum diameter which is adapted to enable contact pieces (12, 12') of the first bay (4) and second bay (4') to be inserted.

7. A connection device according to any one of claims 1 to 6 having a length which is smaller than or equal to 143 mm and an outside diameter of less than or equal to 56.5 mm for a nominal voltage of 24 kV.

8. A distribution substation comprising at least two bays (4, 4'), each of which comprises at least one busbar, the busbars being connected together by means of a connection device (2) according to any preceding claim.

9. A distribution substation according to claim 8, wherein each bay (4, 4') comprises a set of three busbars, with each busbar of a set being connected to a busbar in the set of the other bay by means of a connection device (2) according to any one of claims 1 to 6.

10. A distribution substation according to claim 8 or claim 9, wherein each bay (4, 4') comprises a gastight chamber filled with dielectric gas, each busbar being equipped, at at least one of its longitudinal ends, with a contact piece (12, 12') that is adapted to penetrate into a connecting gripper (24) of the connection device (2), the said contact piece (12, 12') being received in a bushing (10, 10') that is mounted in a wall (8, 8') of the chamber in facing relationship with a wall (8', 8) of the adjacent chamber, the bushing (10, 10') having a shape corresponding to that of a longitudinal end portion (20.1, 20.2) of the connection device (2), with each longitudinal end portion (20.1, 20.2) of the connection device (2) being inserted into one bushing (10, 10').

11. A distribution substation according to any one of claims 8 to 10, wherein the connecting apparatus has a length of 143 mm and an outside diameter of 56.5 mm, and the bushing (10, 10') has a length of 80 mm and an outside diameter of 84 mm at the end thereof into which the connection device (2) is to be inserted, while its inside diameter is 57 mm at the end of the bushing through which the connection device is to be inserted, for a nominal voltage of 24 kV.
